(19) Europäisches Patentamt

European Patent Office

Office européen des brevets

(11) Veröffentlichungsnummer: **0 309 856**
**A2**

(12) ## EUROPÄISCHE PATENTANMELDUNG

(21) Anmeldenummer: 88115360.5

(51) Int. Cl.⁴: **F16K 39/02**

(22) Anmeldetag: 19.09.88

(30) Priorität: 20.09.87 DE 3731664

(43) Veröffentlichungstag der Anmeldung:
05.04.89 Patentblatt 89/14

(84) Benannte Vertragsstaaten:
**AT BE CH DE ES FR GB GR IT LI LU NL SE**

(71) Anmelder: **SEMPELL AKTIENGESELLSCHAFT**
**Werner-von-Siemens-Strasse**
**D-4052 Korschenbroich(DE)**

Anmelder: **Häfele, Carl Heinz**
**Werner-von-Siemens-Strasse**
**D-4052 Korschenbroich(DE)**

(72) Erfinder: **Häfele, Carl Heinz, Dipl.-Ing.**
**Werner-von-Siemens-Strasse**
**D-4052 Korschenbroich(DE)**
Erfinder: **Weyand, Manfred, Dr.-Ing.**
**Werner-von-Siemens-Strasse**
**D-4052 Korschenbroich(DE)**

(74) Vertreter: **Ostertag, Reinhard et al**
**Patentanwälte Dr. Ulrich Ostertag Dr.**
**Reinhard Ostertag Eibenweg 10**
**D-7000 Stuttgart 70(DE)**

(54) Servoventil.

(57) Bei einem Servoventil ist auf einen vom Verschlußstück (22) abliegenden Endabschnitt (66) der Ventilspindel (26,42) ein Metallbalg (70) aufgesetzt, dessen eines Ende gehäusefest (72) abgestützt ist, während sein anderes Ende am Spindelende angreift. Der Metallbalg (70) befindet sich in einer Druckkammer (62), die über eine Kondensatschlange (74) mit dem Ventileinlaß (12) verbunden ist, wobei die Querschnittsfläche des Metallbalges (70) auf die Durchtrittsfläche des Ventilsitzes (16) abgestimmt ist. Auf diese Weise läßt sich insgesamt ein Kraftausgleich des Verschlußstückes (22) oder eine gewünschte Zusatzbelastung in Schließ- oder Öffnungsrichtung erzielen.

FIG. 1

EP 0 309 856 A2

## Servoventil

Die Erfindung betrifft ein Servoventil gemäß dem Oberbegriff des Anspruches 1.

Bei derartigen Servoventilen ist üblicherweise der Stellmotor so ausgebildet, daß er zwei stabile Stellungen einnehmen kann. In der Regel wird die eine Stellung durch eine Vorspannfeder eingestellt, während die andere Stellung durch Erregen eines Elektromagneten oder Druckbeaufschlagung eines Fluid-Stellmotors eingestellt wird.

Häufig hat man Anwendungsfälle, bei denen unter unterschiedlichem Druck stehendes Strömungsmittel durch das Servoventil gesteuert werden muß. Bei den bekannten Servoventilen kommt es dann infolge unterschiedlicher Druckbeaufschlagung des innerhalb des Ventilsitzes gelegenen Bereiches des Verschlußstückes nicht nur zu einer unterschiedlich guten Dichtkraft des Ventiles in seiner Schließstellung sondern auch zu unterschiedlichen Betätigungskräften. Dies bedeutet, daß man den Stellmotor auf die maximal zu erwartende Druckbeaufschlagung des Verschlußstückes ausrichten muß.

Durch die vorliegende Erfindung soll daher ein Servoventil gemäß dem Oberbegriff des Anspruches 1 so weitergebildet werden, daß die Auswirkungen des einlaßseitig anstehenden Druckes auf die Dichtkraft und die Betätigungskraft des Servoventiles zumindest teilweise, vorzugsweise ganz ausgeräumt sind.

Diese Aufgabe ist erfindungsgemäß gelöst durch ein Servoventil gemäß Anspruch 1.

Bei dem erfindungsgemäßen Servoventil wird auf das Verschlußstück durch den zusätzlich vorgesehenen Kompensationsmotor eine zusätzliche Kraft ausgeübt, die der durch Druckbeaufschlagung des innerhalb des Ventilsitzes liegenden Bereiches des Verschlußstückes erhaltenen Kraft entgegengesetzt ist. Betragsmäßig ist die Zusatzkraft an der durch Druckbeaufschlagung des Verschlußstückes erhaltenen Kraft orientiert, wobei kleinere Abweichungen von der Gleichheit nach oben dann vorteilhaft sein können, wenn man eine mit steigendem Einlaßdruck wachsende Dichtkraft des Ventiles wünscht, während man eine Abweichung von der Gleichheit nach unten dann vorsehen kann, wenn man mit wachsendem einlaßseitigem Druck ein schnelleres Öffnungsverhalten erzielen will.

Vorteilhafte Weiterbildungen der Erfindung sind in Unteransprüchen angegeben.

Die Weiterbildung der Erfindung gemäß Anspruch 2 ist deshalb von Vorteil, weil man für den Kompensationsmotor keine zusätzlichen Zylinder- und Kolbenflächen hat, welche auf die Achse der Ventilspindel ausgerichtet werden müßten.

Bei einem Servoventil gemäß Anspruch 3 liegt der Metallbalg, der den Kompensationsmotor bildet, am äußersten Ende des Servoventiles und kann so leicht im Bedarfsfalle ersetzt werden. Die im Anspruch 3 angegebene räumliche Anordnung erleichtert auch das Nachrüsten schon im Einsatz befindlicher Servoventile.

Bei einem Servoventil gemäß Anspruch 4 ist der den Kompensationsmotor bildende Metallbalg innen mit dem einlaßseitig anstehenden Druck beaufschlagt, was es erlaubt, besonders dünne und damit preisgünstige Balge zu verwenden.

Mit der Weiterbildung der Erfindung gemäß Anspruch 6 wird erreicht, daß Druckänderungen im Inneren des Metallbalges in der Umgebung der einen Endstellung des Ventiles nur langsam erfolgen, wobei die durch die Schikane vorgenommene Drosselung mit zunehmender Auslenkung der Ventilspindel aus besagter Endlage abnimmt.

Mit der Weiterbildung der Erfindung gemäß Anspruch 7 wird erreicht, daß der den Kompensationsmotor bildende Metallbalg zugleich die Funktion eines auf die Ventilspindel arbeitenden druckmittelbetätigten Stellmotors ausüben kann.

Bei einem Servoventil gemäß Anspruch 8 hat man einen normalerweise nicht arbeitenden Hilfs-Kompensationsmotor, der bei Ausfall des Metallbalges automatisch an dessen Stelle tritt und - abgesehen von etwas schlechteren Dichteigenschaften - den Ausfall des Metallbalges überspielt.

Mit der Weiterbildung der Erfindung gemäß Anspruch 9 wird erreicht, daß der Arbeitsraum des Kompensationsmotors und die zu ihm führende Leitung von Dampf freigehalten werden, also mit Flüssigkeit gefüllt ist sind, so daß Druckänderungen am Ventileinlaß rasch und ungeschmälert an den Arbeitsraum des Kompensationsmotors weitergegeben werden.

Nachstehend wird die Erfindung anhand von Ausführungsbeispielen unter Bezugnahme auf die Zeichnung näher erläutert. In dieser zeigen:

Figur 1: einen axialen Schnitt durch ein normalerweise geschlossenes Arbeitsstrom-Magnetventil;

Figur 2: einen axialen Schnitt durch ein normalerweise geschlossenes Ruhestrom-Magnetventil;

Figur 3: einen axialen Schnitt durch ein druckmittelbetätigtes Servoventil;

Figur 4: einen axialen Schnitt durch ein weiteres druckmittelbetätigtes Servoventil;

Figur 5: einen axialen Schnitt durch ein druckmittelbetä tigtes Vorsteuerventil mit angebautem Hauptventil; und

Figur 6: einen vergrößerten Schnitt durch den oberen Endabschnitt des in Figur 5 gezeigten Vorsteuerventiles.

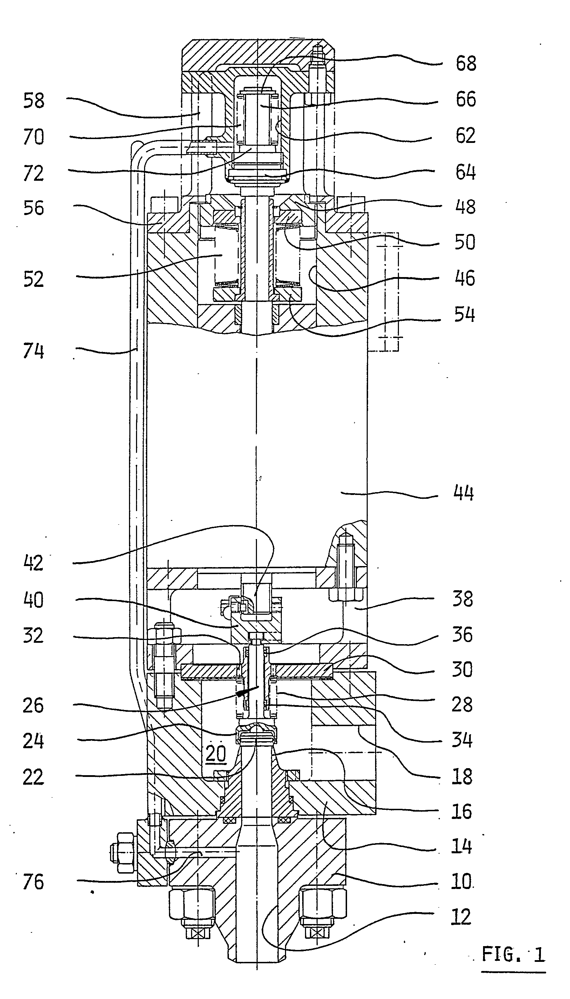

Das in Figur 1 gezeigte Servoventil hat einen unteren Dekkel 10, in welchem ein Einlaßkanal 12 vorgesehen ist. Ein unteres Gehäuseteil 14 trägt in seiner Bodenwand einen Ventilsitz 16, der mit dem Einlaßkanal 12 in Verbindung steht. In der Umfangswand des Gehäuseteiles 14 ist ein Auslaßkanal 18 vorgesehen, der mit einem ringförmigen, den Ventilsitz 16 umgebenden Auslaßraum 20 in Verbindung steht.

Mit dem Ventilsitz 16 arbeitet ein Verschlußstück 22 zusammen, welches in einem unteren Kopfabschnitt 24 einer insgesamt mit 26 bezeichneten Ventilspindel geringfügig verkippbar gehalten ist.

Die Ventilspindel 26 ist über einen metallischen Dichtbalg 28 gegen eine Zwischenplatte 30 abgedichtet, welche die Oberseite des Auslaßraumes 20 verschließt. Die Zwischenplatte 30 hat in ihrem zentralen Bereich mehrere Bohrungen 32, die mit dem Inneren des Dichtbalges 28 in Verbindung stehen.

Die Ventilspindel 26 ist in der Zwischenplatte 30 durch Gleitdichtpackungen 34, 36 geführt und abgedichtet.

Auf das untere Gehäuseteil 14 ist ein laternenförmiges mittleres Gehäuseteil 38 aufgesetzt, durch dessen seitliche Öffnungen ein Kupplungsstück 40 zugänglich ist, über welches die Ventilspindel 26 mit einer Ankerspindel 42 verbunden ist. Letztere stellt das Abtriebsteil eines nicht näher gezeigten Elektromagneten dar, dessen Gehäuse 44 auf das mittlere Gehäuseteil 38 aufgesetzt ist.

Im oberen Abschnitt des Magnetgehäuses 44 ist eine Federkammer 46 vorgesehen, die durch einen Kammerdeckel 48 verschlossen ist. An der Unterseite des Kammerdeckels 48 ist unter Zwischenschaltung eines Sitzringes 50 das obere Ende eines Tellerfederstapels 52 abgestützt, dessen unteres Ende an einem fest mit der Ankerspindel 42 verbundenen Federsitz 54 angreift. Auf diese Weise ist das Verschlußstück 22 in die Schließstellung vorgespannt und kann durch Erregen des Elektromagneten vom Ventilsitz 16 abgehoben werden.

Das Festlegen des Kammerdeckels 48 erfolgt durch den unteren Flansch 56 eines oberen Dekkels 58 des Ventilgehäuses, der wiederum laternenförmig ausgebildet ist. An der oberen Wand des Deckels 58 ist ein Motorgehäuse 60 festgeschraubt, in welchem eine nach unten offene zylindrische Druckkammer 62 vorgesehen ist. In das untere Ende der Druckkammer 62 ist ein zylindrisches Endstück 64 fest und dicht eingesetzt, welches eine mittige Führungsbohrung aufweist, durch welche sich ein Endabschnitt 66 der Ankerspindel 42 hindurch erstreckt. Dieser Endabschnitt 66 trägt bei seinem freien Ende einen angeformten Flansch 68, an welchem das obere Ende eines Metallbalges 70 strömungsmitteldicht festgelegt ist. Das untere Ende des Metallbalges 70 ist dicht mit einer Schulter 72 des Endstückes 64 verbunden.

Die Druckkammer 62 steht über eine Kondensatschlange 74, die sich in mehreren Windungen längs der Mantelfläche des Ventilgehäuses erstreckt, mit einem Zapfkanal 76 in Verbindung, der im unteren Deckel 10 des Ventilgehäuses ausgebildet ist und vom Einlaßkanal 12 ausgeht. Auf diese Weise ist die Druckkammer 62 über eine Flüssigkeitssäule mit dem im Enlaßkanal 12 herrschenden Druck beaufschlagt.

Der Durchmesser des Metallbalges 70 ist beim dargestellten Ausführungsbeispiel gleich groß wie der Durchmesser der kreisförmigen freien Kante des Ventilsitzes 16, so daß die mit dem Druck im Einlaßkanal 12 beaufschlagten Flächen des Verschlußstückes 22 bzw. des Metallbalges 70 gleich groß sind. Da diese Flächen ferner in entgegengesetzte Richtung weisen, wird auf das Verschlußstück 22 insgesamt keine Kraft ausgeübt, welche vom im Einlaßkanal 12 anstehenden Druck abhängig wäre. Unabhängig von diesem Druck ist die Schließkraft des Ventiles durch die Stärke des Tellerfederstapels 52 vorgegeben; das Öffnungsverhalten des Ventiles ist wiederum unabhängig vom anstehenden Druck durch das Arbeitsverhalten des Elektromagneten vorgegeben (zumindest in nullter Näherung, wenn man sekundäre, druckabhängige Strömungseffekte am Verschlußstück 22 vernachlässigt, die erst nach dem Abheben des Verschlußstückes vom Ventilsitz eine Rolle spielen).

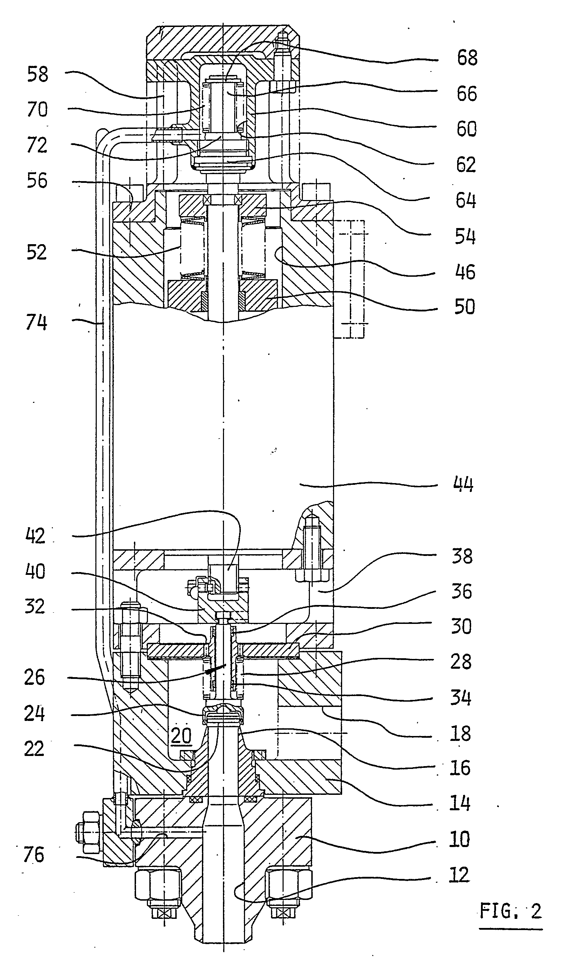

Das in Figur 2 gezeigte Ausführungsbeispiel ist dem nach Figur 1 weitgehend gleich, mit dem einzigen Unterschied, daß nunmehr der feststehende Sitzring 50 unter dem Tellerfederstapel 52 angeordnet ist, während der mit der Ankerspindel 42 verbundene bewegliche Federsitz 54 der obenliegende Federsitz ist. Damit ist das Verschlußstück 22 durch den Tellerfederstapel 52 in die Offenstellung vorgespannt; zum Einstellen der normalerweise geschlossenen Stellung des Ventiles muß durch den Elektromagneten ein Ruhestrom geschickt werden.

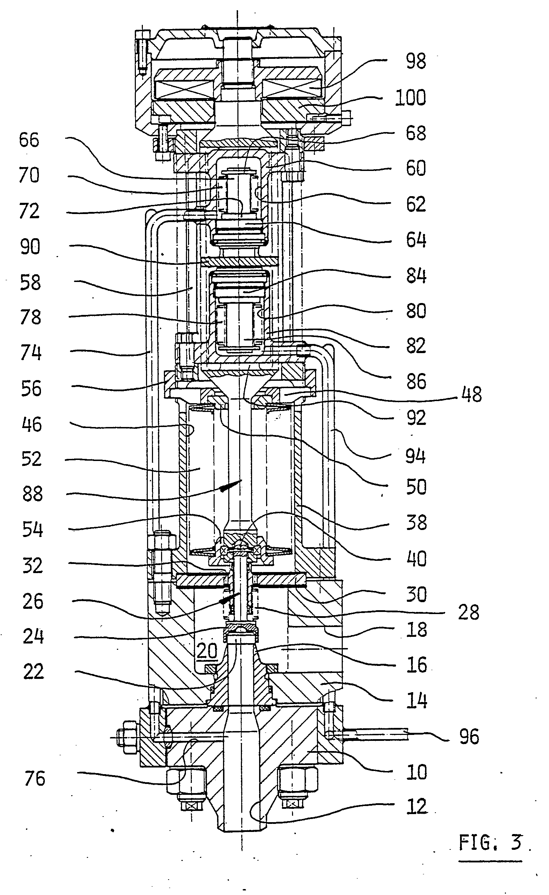

Auch bei dem in Figur 3 gezeigten Servoventil sind Ventilteile, die funktionsmäßig oben schon erläuterten Ventilteilen entsprechen, wieder mit denselben Bezugszeichen versehen und werden nicht noch einmal detailliert besprochen.

Zur Steuerung des Ventiles ist ein zweiter druckmittelbetätigter Motor vorgesehen, welcher einen zweiten Metallbalg 78 umfaßt. Dieser befindet sich in einer weiteren Druckkammer 80, die in einem zweiten Motorgehäuse 82 ausgebildet ist.

Das Motorgehäuse 82 ist mit der unteren Stirnwand des laternenförmigen Gehäuseteiles 58 verbunden.

Durch ein obenliegendes Endstück 84 ist die Druckkammer 80 des Motorgehäuses 82 verschlossen. Durch dieses Endstück 84 ist ein weiterer stabförmiger Endabschnitt 86 einer insgesamt mit 88 bezeichneten Antriebsspindel im Gleitspiel durchgeführt. Die beiden Endabschnitte 66 und 86 sind beide von einer Brücke 90 getragen, die an einem Käfigabschnitt 92 der Antriebsspindel 88 festgeschweißt ist. Der Käfigabschnitt 92 der Antriebsspindel 88 umgibt die Motorgehäuse 60 und 82 unter radialem Spiel und erlaubt zugleich das Zuführen von Druckmittel zu den beiden Druckkammern 62 und 80 über die Kondensatschlange 74 sowie eine zweite Kondensatschlange 94, die über eine Leitung 96 und ein nicht näher gezeigtes Steuerventil mit einer Steuerdruckquelle verbunden ist.

Das obere Ende der Antriebsspindel 88 trägt einen Permanentmagneten 98, der mit einer feststehenden Ankerplatte 100 zusammenarbeitet. Auf diese Weise erhält man eine mit dem Hub des Verschlußstückes 22 stark abnehmende Vorspannkraft in Schließrichtung, wie an sich von Vollhub-Sicherheitsventilen her bekannt.

Auch bei dem in Figur 3 gezeigten Servoventil ist die Querschnittsfläche des Metallbalges 70 an die durch den Ventilsitz 16 vorgegebene Ringfläche angepaßt, so daß wiederum eine Kompensation der Druckbeaufschlagung des Verschlußstückes 22 erhalten wird.

Aus geometrischen Gründen ist beim in Figur 3 gezeigten Ausführungsbeispiel die Querschnittsfläche des zweiten Metallbalges 78 nur geringfügig größer gewählt als die Querschnittsfläche des Metallbalges 70, da beide Motorgehäuse 60 und 82 im Inneren des Käfigabschnittes 92 der Antriebsspindel 88 Aufnahme finden sollen.

Abgesehen davon, daß bei dem Servoventil nach Figur 3 das Verlagern des Verschlußstückes 22 zwischen seinen beiden Endstellungen durch Druckbeaufschlagung des Metallbalges 78 erfolgt, liegt eine ähnliche Arbeitsweise vor wie bei den weiter oben beschriebenen Ausführungsbeispielen.

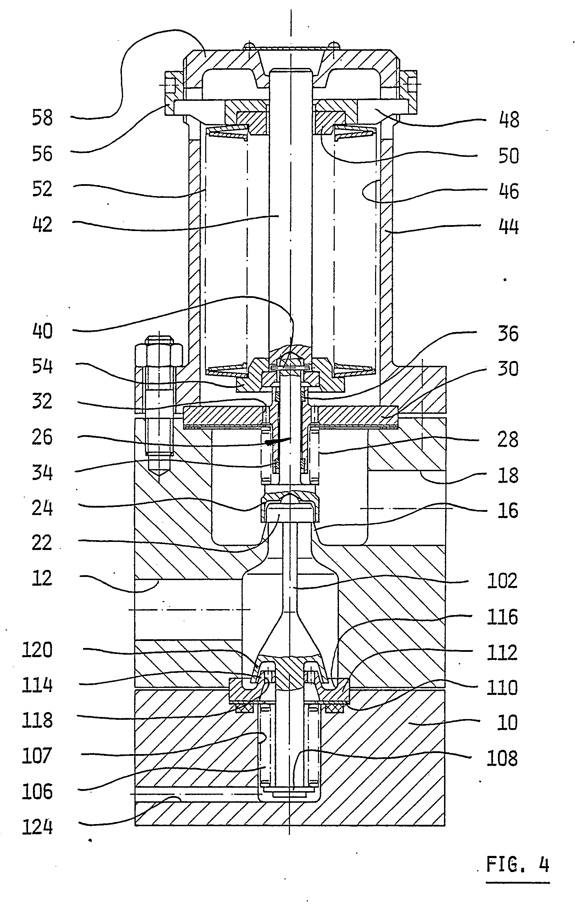

Figur 4 zeigt ein direkt gesteuertes druckmittelbetätigtes Servoventil, bei welchem ein einziger Metallbalg sowohl für den Kraftausgleich am Verschlußstück als auch für die Stellbewegung sorgt. Weiter oben schon erläuterte Ventilteile bleiben wieder ohne detaillierte Beschreibung.

An das Verschlußstück 22 ist ein nach unten herabhängender Stößel 102 angeformt, welcher mit einem Endabschnitt 104 durch das Innere eines Metallbalges 106 geführt ist. Der Endabschnitt 104 trägt wieder einen Flansch 108, an dem das treibende, nunmehr untenliegende Ende des Metallbalges 106 dicht befestigt ist, während dessen oberes Ende dicht an einer gehäusefest angeordneten Scheibe 110 befestigt ist. Letztere ist zusammen mit einem Schikaneteil 112 zwischen den unteren Deckel 10 und das Gehäuseteil 14 eingespannt.

Das Schikaneteil 112 hat einen mittleren kegelförmigen Abschnitt 114, der von einer kreisförmigen Rinne 116 umgeben ist. Im kegelförmigen Abschnitt 114 ist eine Mehrzahl von Bohrungen 118 vorgesehen, die über die Scheibe 110 mit dem Innenraum des Metallbalges 106 in Verbindung stehen.

An den Stößel 102 ist ein kegelförmiger Schikaneschirm 120 angeformt, welcher den kegelförmigen Abschnitt 114 des Schikaneteiles 112 unter geringem Abstand übergreifen kann. Die beiden Schikaneteile 112 und 120 bilden somit eine variable, vom Hub des Verschlußstückes 22 abhängige Drosselstelle, über welche der Innenraum des Metallbalges 106 mit dem Einlaßkanal 12 in Verbindung steht.

Der Metallbalg 106 befindet sich in einer Druckkammer 107, die im unteren Deckel 10 ausgebildet ist. Diese Druckkammer steht mit einem Steuerkanal 124 in Verbindung, der über ein nicht näher gezeigtes Steuerventil mit einer Steuerdruckquelle verbindbar ist.

Die Querschnittsfläche des Metallbalges 106 ist wiederum auf die vom Ventilsitz 16 vorgegebene Kreisfläche abgestimmt, so daß das Verschlußstück 22 bei geschlossenem Ventil wieder keine vom Druck im Einlaßkanal abhängige Nettokraft erfährt; die Schließkraft des Ventiles ist durch den Tellerfederstapel 52 vorgegeben. Wird der Steuerkanal 124 mit Druck beaufschlagt, so kann die Kraft des Tellerfederstapels 52 überwunden werden, und das Verschlußstück 22 wird vom Ventilsitz 16 abgehoben.

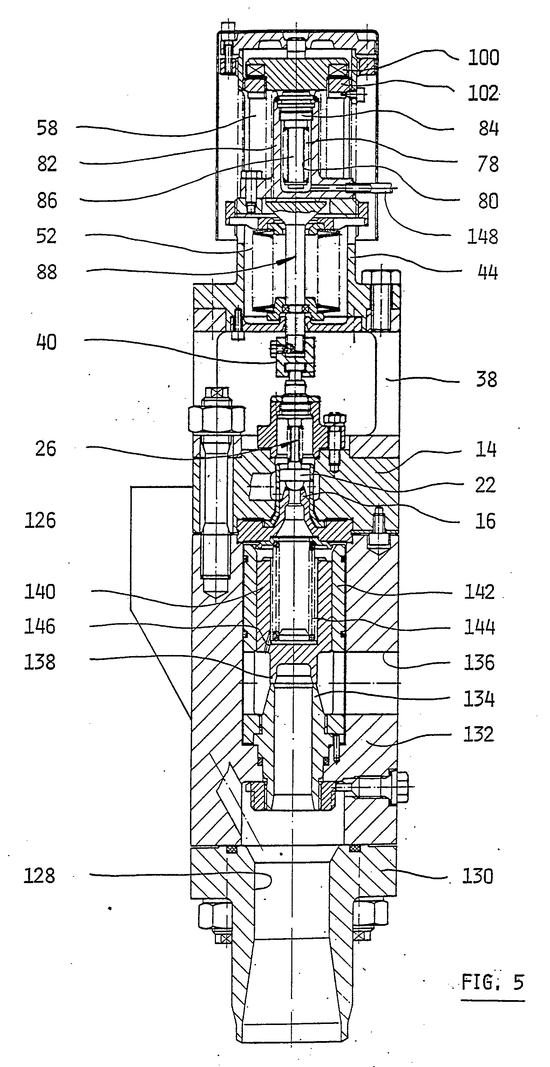

Ein Ventil, wie es ähnlich in Figur 3 gezeigt ist, läßt sich auch als Vorsteuerventil verwenden, wie das Ausführungsbeispiel nach Figur 5 zeigt.

Bei dem dort wiedergegebenen vorgesteuerten Ventil ist der Auslaßkanal 12 des Vorsteuerventiles über eine Leitung 126 mit einem Auslaßkanal 128 des Hauptventiles verbunden. Das Hauptventil hat einen diesen Kanal begrenzenden unteren Deckel 130 sowie ein Gehäusehauptteil 132, in welchem ein Hauptventilsitz 134 vorgesehen ist. Letzterer führt zu einem Einlaßkanal 136.

Ein mit dem Hauptventilsitz 134 zusammenarbeitender Hauptventilkörper 138 ist an das untere Ende eines Stellkolbens 140 angeformt, der in einer Büchse 142 läuft. Im Inneren des Stellkolbens 140 ist eine Schraubenfeder 144 angeordnet, durch welche der Hauptventilkörper 138 in Schließrichtung vorgespannt ist. Die Rückseite des Stellkolbens 140 ist über eine Bohrung 146 mit dem Einlaßkanal 136 verbunden.

Der Metallbalg 70 des Vorsteuerventiles ist mit einer Steuerleitung 148 verbunden, die wiederum über ein nicht gezeigtes Steuerventil mit einer Steuerdruckquelle in Verbindung steht. Diese Steuerdruckquelle kann der am Einlaß des Hauptventiles anstehende Druck sein.

Durch Druckbeaufschlagung der den Metallbalg 78 umgebenden Druckkammer 80 läßt sich das Vorsteuerventil entgegen der Kraft des Tellerfederstapels 52 öffnen, wodurch dann eine Verbindung zwischen der Rückseite des Stellkolbens 140 und dem Auslaßkanal 128 des Hauptventiles hergestellt wird. Wird die Druckkammer 80 dagegen von der Steuerdruckquelle getrennt, so wird das Verschlußstück 22 durch den Tellerfederstapel 52 gegen den Ventilsitz 16 gedrückt und die Rückseite des Stellkolbens 140 wird über die Bohrung 146 vom Einlaßkanal 136 des Hauptventiles her aufgefüllt.

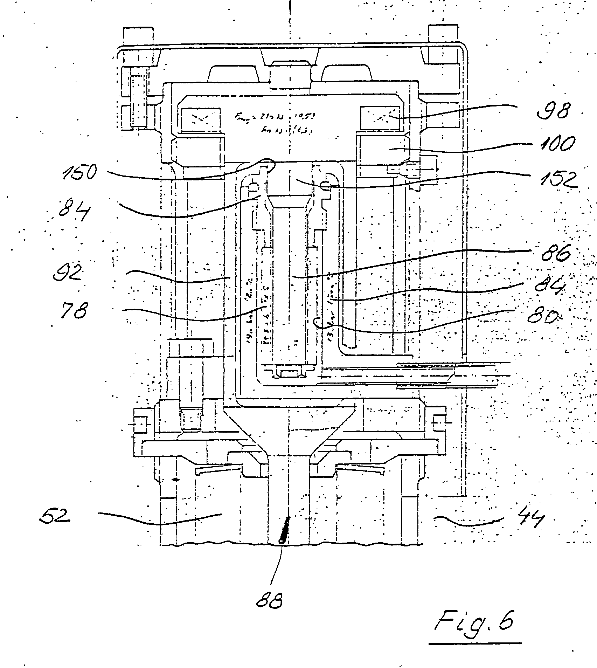

Figur 6 zeigt Einzelheiten der mechanischen Verbindung zwischen der Antriebsspindel 88 des Vorsteuerventiles und dem Metallbalg 78.

Das Endstück 84 des Motorgehäuses 82 hat eine vergrößerten Durchmesser aufweisende Führungsbohrung 150, die zugleich eine Zylinderlauffläche für einen Kolbenabschnitt 152 des Endabschnittes 86 der Antriebsspindel 88 darstellt. Der unter dem Kolbenabschnitt 152 liegende Rest des Endabschnittes 86 hat verminderten Durchmesser und durchsetzt das Endstück 84 sowie den Metallbalg 78 unter radialem Spiel. Das unterste Ende des Endabschnittes 86 ist mit dem unteren Ende des Metallbalges 78 dicht verbunden.

Wie aus der Zeichnung ersichtlich, entspricht die Querschnittsfläche des Kolbenabschnittes 152 der effektiven Querschnittsfläche des Metallbalges 78, so daß der Kolbenabschnitt 152 dann, wenn der Metallbalg 78 brechen oder undicht werden sollte, direkt mit dem Druck in der Druckkammer 80 beaufschlagt ist und auf die Antriebsspindel 88 und damit das Verschlußstück 22 eine in der Zeichnung nach oben gerichtete Kraft gleicher Größe erzeugt wie der Me tallbalg 78. Auch bei Bruch des Metallbalges 78 ist somit die Funktion des Ventiles gewährleistet.

Eine derartige Notlauffunktion läßt sich analog auch bei den oben unter Bezugnahme auf die Figuren 1 bis 4 beschriebenen Ventilen vorsehen.

## Ansprüche

1. Servoventil mit einem Gehäuse, in welchem zwischen einem Einlaß und einem Auslaß ein Ventilsitz ausgebildet ist, mit einem von einer Ventilspindel getragenen und mit dem Ventilsitz zusammenarbeitenden Verschlußstück und mit einem auf die Ventilspindel arbeitenden Stellmotor, dadurch gekennzeichnet, daß mit einem vom Verschlußstück (22) abliegenden Endabschnitt (66; 86) der Ventilspindel (26, 42; 26, 88; 42, 102) ein Kompensationsmotor (70; 78; 102) verbunden ist, dessen Arbeitsraum mit dem Ventileinlaß (12) verbunden ist und dessen aktive Druckbeaufschlagungsfläche im Hinblick auf den durch den Ventilsitz (16) vorgebenen aktiven Bereich des Verschlußstückes (22) derart gewählt ist, daß die vom Kompensationsmotor (70; 78; 106) erzeugte Kraft derjenigen Kraft entgegengesetzt ist, die durch das anstehende Strömungsmittel auf das Verschlußstück (22) ausgeübt wird, und vorzugsweise betragsmäßig gleich groß oder nur wenig kleiner oder größer ist als diese Kraft.

2. Servoventil nach Anspruch 1, dadurch gekennzeichnet, daß der Kompensationsmotor einen Metallbalg (70; 78; 106) aufweist, dessen eines Ende gehäusefest abgestützt ist und dessen anderes Ende an der Ventilspindel (26, 42; 26, 88; 26, 102) angreift.

3. Servoventil nach Anspruch 2, dadurch gekennzeichnet, daß der Metallbalg (70; 78) von einem in Öffnungsrichtung endständigen Abschnitt (66; 86) der Ventilspindel (26, 42; 26, 88) getragen ist und in einer Druckkammer (62; 82) angeordnet ist, die mit dem Ventileinlaß (12) verbunden ist, während das Innere des Metallbalges (70; 78) entlüftet ist.

4. Servoventil nach Anspruch 2, dadurch gekennzeichnet, daß der Metallbalg (106) von einem in Schließrichtung endständigen Abschnitt (102) der Ventilspindel (26, 102) getragen ist und der Innenraum des Metallbalges (106) mit dem Ventileinlaß (12) in Verbindung steht.

5. Servoventil nach Anspruch 4, dadurch gekennzeichnet, daß der Innenraum des Metallbalges (106) über eine Schikane (112, 120) mit dem Ventileinlaß (12) in Verbindung steht.

6. Servoventil nach Anspruch 5, dadurch gekennzeichnet, daß die Schikane einen von der Ventilspindel (26, 102) getragenen beweglichen kegelförmigen Schikanekörper (120) und einen in diesen eingreifenden feststehenden kegelförmigen Schikanekörper (112) aufweist.

7. Servoventil nach einem der Ansprüche 4 bis 6, dadurch gekennzeichnet, daß der Metallbalg (106) in eine Motorkammer (107) ragt, welche mit einer Stelldruckquelle in Verbindung steht.

8. Servoventil nach einem der Ansprüche 3 bis 7, dadurch gekennzeichnet, daß das feststehende Ende des Metallbalges von einem gehäusefesten Endstück (84) gebildet ist, in welchem eine Zylinderbohrung (150) ausgebildet ist, welche gleichen Durchmesser hat wie der Metallbalg und einen Kolbenabschnitt (152) der Ventilspindel (26, 88) im Gleitspiel aufnimmt, der seinerseits einen Spindelendabschnitt (86) trägt, der durch das Innere des außenbeaufschlagten Metallbalges (78) zu dem beweglichen, treibenden Ende des Metallbalges (78) geführt und mit diesem verbunden ist.

9. Servoventil nach einem der Ansprüche 1 bis 8, dadurch gekennzeichnet, daß der Arbeitsraum (62; 82) des Kompensationsmotors über ein vorzugsweise eine Schlange bildendes Kondensatrohr (74) mit dem Ventileinlaß (12) verbunden ist.

FIG. 1

FIG. 2

FIG. 3

FIG. 4

58
82
86
52
88

40

26

126

140
146
138

128

100
102
84
78
80
148
44

38

14
22
16

142
144
136
134
132

130

FIG. 5

EP 0 309 856 A2

Fig. 6